# EUROPEAN PATENT APPLICATION

(11) **EP 2 320 250 A2**
(43) Date of publication of application: **11.05.2011**
(21) Application number: 10161888.2
(22) Date of filing: 04.05.2010
(51) Int. Cl.: G01S 19/09, G01S 19/14, G01S 19/48, G01S 5/00

(54) **Mobile terminal to provide location management using multimedia data and method thereof**

(30) Priority: 04.05.2009 KR 20090039010; 10.06.2009 KR 20090051375
(71) Applicant: Pantech Co., Ltd., Seoul 121-792 (KR)
(72) Inventor: Ha, Yong Gu, 121-792, Seoul (KR); Jeong, Chang Bong, 121-792, Seoul (KR)
(74) Representative: Herzog, Markus

(57) **Abstract**

A mobile terminal to manage a location using multimedia data and a method thereof are disclosed. The mobile terminal acquires a Global Positioning System (GPS) satellite signal in a camera preview and utilizes the GPS satellite signal in a map service in association with multimedia data. In addition, the mobile terminal acquires and stores place name information from a location guide service using location information, and provides a service using the location information stored in the multimedia data.

## Description

### CROSS-REFERENCE TO RELATED APPLICATION

This application claims priority from and the benefit of Korean Patent Application No. 10-2009-0039010, filed on May 04, 2009, and Korean Patent Application No. 10-2009-0051375, filed on June 10, 2009, which are both hereby incorporated by reference for all purposes as if fully set forth herein.

### BACKGROUND

1. Field

This disclosure relates to a mobile terminal to provide a location guide service and a method thereof.

2. Discussion of the Background

As communication technology develops rapidly and the number of subscribers of a mobile communication service increases continuously, various supplementary services using a mobile terminal, such as video call, message transmission or reception, wireless Internet, and broadcast, have been introduced and commercially available.

A location guide service is one of such supplementary services. For example, a mobile terminal may show nearby restaurants, public institutions, performance information, local events, etc., together with a map or may provide services, such as a fastest route from a current location to a desired destination, a direct telephone call to a destination, and map reception.

The existing location guide service merely magnifies a portion of a map corresponding to an area desired by a user and provides the magnified portion on a high-resolution map or shows location information through a mobile terminal using a Short Message Service (SMS) only once. Accordingly, there is a need for a different method of providing information about location or movement of a user.

### SUMMARY

Exemplary embodiments provide a mobile terminal and a location management method using multimedia data capable of embedding location information (i.e., latitude/longitude information) or place name information in the multimedia data, such as an image, and utilizing the information.

Exemplary embodiments provide a mobile terminal and a location management method using multimedia data, capable of associating a Global Positioning System (GPS) satellite signal with the multimedia data to provide a location guide service.

Exemplary embodiments provide a mobile terminal to associate a GPS satellite signal with an image and a method thereof, which are capable of acquiring a GPS satellite signal in a camera preview mode of the mobile terminal.

Exemplary embodiments provide a mobile terminal to associate a GPS satellite signal with an image and a method thereof, which are capable of acquiring and storing place name information from a map service using latitude/longitude information.

Exemplary embodiments provide a mobile terminal to associate a GPS satellite signal with an image and a method thereof, which are capable of providing a service (e.g., a navigation service, a map service or the like) using the location information stored in multimedia data.

Additional features of the invention will be set forth in the description which follows, and in part will be apparent from the description, or may be learned by practice of the invention.

An exemplary embodiment provides a mobile terminal including a display; a mode selector to select a location tracking mode in which a Global Positioning System (GPS) satellite signal is used to acquire location information to be associated with multimedia data displayed on the display; a location tracker to track a location according to the selected location tracking mode, and to acquire the location information; and a storage to store the location information.

An exemplary embodiment provides a method for location management for a mobile terminal, the method including displaying a multimedia data on a screen; selecting a location tracking mode in which a GPS satellite signal is used to acquire location information to be associated with the multimedia data; acquiring the location information by tracking a location in the selected location tracking mode; and storing the location information to be associated with the multimedia data.

An exemplary embodiment provides a mobile terminal including a mode selector to select a location tracking mode; a location tracker to track a location according to the selected location tracking mode, and to acquire location information; and a storage to store the location information.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a schematic diagram showing a configuration of a mobile terminal according to an exemplary embodiment.

FIG. 2 is a flowchart illustrating a location management method using multimedia data according to an exemplary embodiment.

FIG. 3 is a view illustrating a process of acquiring a Global Positioning System (GPS) satellite signal in a camera preview mode of a mobile terminal according an exemplary embodiment.

FIG. 4 and FIG. 5 are views illustrating an image including location information and a method of utilizing the same in a mobile terminal according to an exemplary embodiment.

Throughout the drawings and the detailed description, unless otherwise described, the same drawing reference numerals are understood to refer to the same elements, features,and structures. The relative size and depiction of these elements may be exaggerated for clarity, illustration,and convenience.

### DETAILED DESCRIPTION

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

The terminology used herein is for the purpose of describing exemplary embodiments only and is not intended to be limiting of this disclosure. As used herein, the singular forms "a", "an", and "the" are intended to include the plural forms as well, unless the context clearly indicates otherwise. Furthermore, the use of the terms "a", "an", etc. does not denote a limitation of quantity, but rather denotes the presence of at least one of the referenced items. The use of the terms "first","second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises"and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defmed in commonly used dictionaries, should be interpreted as having a meaning that is consistent with their meaning in the context of the relevant art and the present disclosure, and will not be interpreted in an idealized or overly formal sense unless expressly so defined herein.

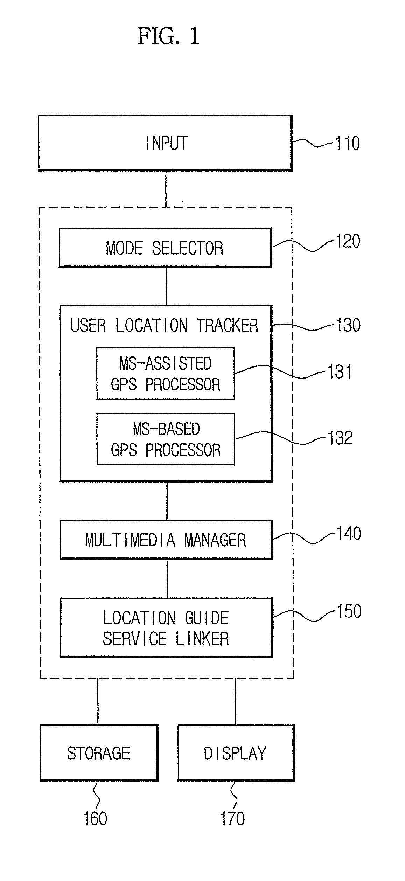

Hereinafter, a mobile terminal according to an exemplary embodiment will be described in detail with reference to FIG. 1. FIG. 1 is a schematic diagram showing the configuration of a mobile terminal according to an exemplary embodiment. Referring to FIG. 1, the mobile terminal includes an input 110, a mode selector 120, a user location tracker 130, a storage 160, and a display 170.

The input 110 generates an input code from data input by a user. A touch screen and/or a key pad, including numeral keys and an OK button, a touch pen, a mouse, or the like, may be used as the input 110.

The display 170 may display a battery use state, a received signal intensity, date and time, an operation state of the terminal, and the like in a standby state of the mobile terminal. Further, the display 170 may visually display multimedia data, such as an image on a screen, according to the user's selection such that the user may perform an operation for registering location information (latitude/longitude information) or place name information in the multimedia data.

The mode selector 120 selects a location tracking mode in which a Global Positioning System (GPS) satellite signal is used to obtain location information, which will be stored or registered so that the location information may be assigned to or associated with the multimedia data (for example, an image, a moving picture, or the like) displayed by the display 170.

For example, the user may select whether the user is located indoors or outdoors so as to select the location tracking mode. A mobile station (MS)-assisted GPS mode is applicable if the user is located indoors and a mobile station (MS)-based GPS mode is applicable if the user is located outdoors.

In the MS-based GPS mode, a mobile terminal searches for a GPS satellite signal and calculates a final location thereof according to the GPS satellite signal. In the MS-assisted GPS mode, a GPS chip mounted in a mobile terminal receives a GPS satellite signal, transmits the received signal to a base station of a mobile communication network, receives location data from the base station, and determines the location of the mobile terminal based on the location data from the base station. When the mobile terminal transmits supplementary data used to obtain a first fix through the base station, a Position Determining Entity (PDE) server in the mobile communication network calculates an actual location and transmits the location value of the mobile terminal. In the MS-assisted GPS mode, a combination of the mobile communication network and the GPS is utilized. The mobile terminal tracks the location of the satellite using assistance data so as to perform synchronization, measures a pseudorange, transmits the measured data to the PDE server of the mobile communication network, and recognizes the location thereof.

The user location tracker 130 tracks a user location according to a location tracking mode selected by the mode selector 120 so as to acquire the location information (i.e., latitude and longitude information).

The user location tracker 130 may include an MS-assisted GPS processor 131 and an MS-based GPS processor 132. The MS-assisted GPS processor 131 and the MS-based GPS processor 132 may be incorporated into a single processor in the user location tracker 130. The MS-assisted GPS processor 131 may operate if the user location is indoors and acquires the location information in the MS-assisted GPS mode for transmitting a GPS satellite signal and receiving a location value from the PDE server of the mobile communication network in response thereto.

The MS-based GPS processor 132 operates if the user location is outdoors and acquires location information in the MS-based GPS mode for searching a GPS satellite signal and calculating a location value according to the search result.

The user location tracker 130 may perform the MS-assisted GPS mode, the MS-based GPS mode, or a combination thereof, according to whether the user location is indoors or outdoors, thereby acquiring accurate location information. For example, a satellite signal may be searched in the MS-based GPS mode and, if the satellite signal is not found within a predetermined time, the user location tracker 130 may change the location tracking mode to the MS-assisted GPS mode so as to acquire the location information through the PDE server of the mobile communication network.

The storage 160 registers the location information acquired by the user location tracker 130 so that the location information may be assigned to or associated with corresponding multimedia data. For example, location information associated with specific multimedia data may be stored in a header portion of that multimedia data.

The mobile terminal of FIG. 1 may further include a multimedia manager 140 and a location guide service linker 150.

When a user inputs a place name search, the multimedia manager 140 retrieves one or more pieces of multimedia data, in which place name information matched to the user input and location information corresponding to the place name information is registered in the header portion, from the storage 160, and aligns and displays the retrieved multimedia data on the display 170.

The location guide service linker 150 associates the location information acquired by the user location tracker 130 with a location guide service (i.e., a navigation service, a map service, a traffic guide service, or the like). Further, the location guide service linker 150 acquires place name information on a map indicated by the acquired location information, transfers the place name information to the storage 160, and stores the place name information in the header portion of the multimedia data together with the location information.

If the user selects multimedia data, the location guide service linker 150 may analyze location information stored in the header portion of the selected multimedia data, acquire place name information on a map indicated by the location information, transfer the acquired place name information to a location guide service, such as a map service, and display a location indicated by the place name information on the map.

For example, a road guide service may be an MS-based navigation service which shows a route from a start point, for example, a current location, to a destination for the user of a mobile terminal. If the user selects one of the photos stored in the mobile terminal so as to request a road guide service, the mobile terminal displays a location corresponding to the selected photo on a map through latitude/longitude information or place name information stored in the header portion of the selected photo, and then shows a route from a current location to the displayed location.

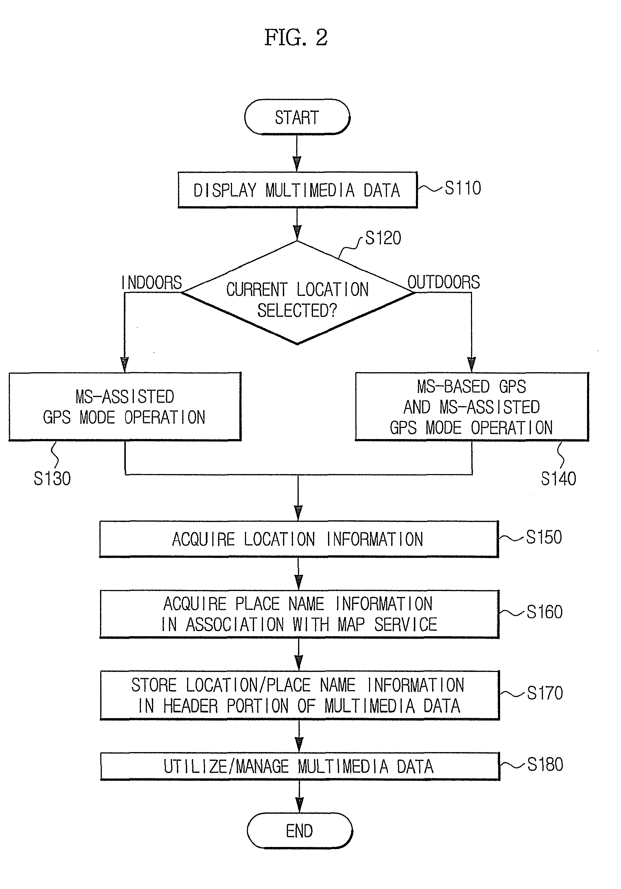

Hereinafter, a location management method using multimedia data according to an exemplary embodiment will be described in detail with reference to FIGS. 2 to 5.

FIG. 2 is a flowchart illustrating a location management method using multimedia data according to an exemplary embodiment.

First, a mobile terminal displays multimedia data (for example, an image) selected by a user on a screen in operation S 110.

When the user selects and inputs a location tracking mode in which a GPS satellite signal is used to acquire location information to be embedded in the multimedia data displayed on the screen in operation S120, the mobile terminal tracks a user location by the selected location tracking mode in operations S130 and S 140 and acquires the location information in operation S150.

For example, in operation S120, the user may select whether a current location is indoors or outdoors so as to set the location tracking mode. If the user is located indoors, the location information may be acquired by an MS-assisted GPS mode in which, when the mobile terminal transmits a signal, a PDE server of a mobile communication network transmits a location value of the mobile terminal in operations S130 and S150. If the user is located outdoors, the location information may be acquired by an MS-based GPS mode in which the mobile terminal searches for GPS satellite signals and calculates its own location value according to the search result. Alternatively, if the user is located outdoors, the satellite signal may begin to be searched in the MS-based GPS mode and, if too few satellite signals are found within a predetermined time, the location tracking mode may be automatically changed to the MS-assisted GPS mode so as to acquire the location information from the PDE server in operation S140 and S150.

Thereafter, the mobile terminal registers the location information (i.e., latitude and longitude information) acquired using the GPS satellite signal to be associated with the multimedia data in operation S 170. Also, the mobile terminal may associate the acquired location information with a built-in location guide service (i.e., a navigation service, a map service, a traffic guide service, or the like) so as to acquire place name information on a map indicated by the location information in operation S160 and stores the place name information in a header portion of the multimedia data together with the location information in operation S 170.

Thereafter, a process of utilizing/managing the multimedia data may be performed in operation S180.

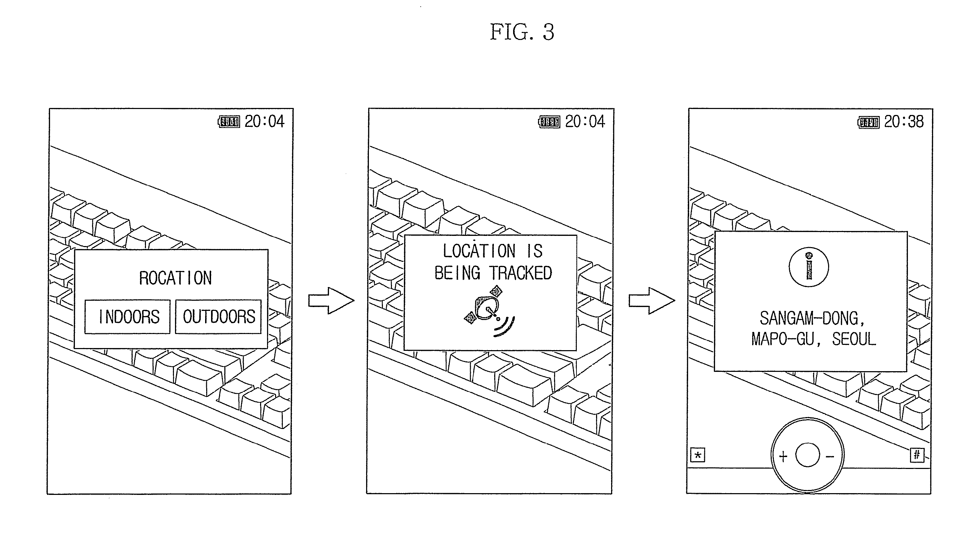

FIG. 3 is a view illustrating a process of acquiring a GPS satellite signal in a camera preview mode of a mobile terminal according an exemplary embodiment.

The mobile terminal includes a GPS chip mounted therein. It associates information acquired by the GPS chip with multimedia data (e.g., a photo photographed by a camera) and utilizes the information in a location guide service, such as a navigation service, a map service, or a traffic guide service.

If the user begins to perform photographing or video-recording using the camera of the mobile terminal (i.e., selects a camera preview mode), the mobile terminal shows an indoor/outdoor selection window that enables the user to select the current location of the user on the camera preview as shown in FIG. 3(a). The camera preview mode displays an image as detected by a camera of the mobile terminal; however, aspects are not limited thereto such that the indoor/outdoor selection window may be displayed in a mode other than the camera preview mode. Thereafter, the mobile terminal begins to track the GPS satellite signal according to the location selected by the user as shown in FIG. 3 (b). At this time, the MS-based GPS mode and/or the MS-assisted GPS mode may be performed according to the indoor/outdoor selection.

The mobile terminal acquires latitude/longitude information according to the user location by the above-described method. The mobile terminal may store the latitude/longitude information in a latitude/longitude part of an image file header (for example, an EXIF format). Alternatively, the mobile terminal may acquire a place name (e.g., Sangam-Dong, Mapo-Gu, Seoul) on a map in association with a map service and store the place name in a user comment part of the image file header (for example, EXIT format).

The latitude/longitude information stored in the header of the image file is later associated with a location guide service, such as a navigation service, a map service, or a traffic guide service, in a multimedia management album. The mobile terminal parses a value stored in the header and transfers the latitude/longitude to the location guide service, thereby directly accessing a corresponding service. In addition, the place name information stored in the header may be used for location search and management, in the multimedia management album.

Accordingly, a method of embedding location information acquired using a GPS satellite signal in multimedia data and managing/utilizing the location information may be implemented. That is, by inputting location information in a header or transferring a user location to a mobile terminal only once using a Short Message Service (SMS) or the like, direct, accurate location information may be acquired in a camera preview mode in real time and location information may be embedded in multimedia data so as to be later utilized.

As shown in FIG. 3 (a) and (b), the mobile terminal begins to track a GPS satellite signal when a user selects the current location. If the user is located indoors, since location data may not be fully acquired from a satellite, an MS-assisted GPS mode for calculating current location information of a terminal using location information of a base station within a mobile communication network is used. If the user is located outdoors, both an MS-assisted GPS mode and an MS-based GPS mode may be used. In this case, a satellite signal begins to be searched in the MS-based GPS mode and, if too few signals are found within a predetermined time, the location tracking mode may be changed to the MS-assisted GPS mode so as to acquire and store location information using information about the base station. If the location information is acquired, as shown in FIG. 3 (c), the location information is associated with a map service so as to acquire a place name indicated by the current latitude/longitude and/or the place name is stored in a header of an image file.

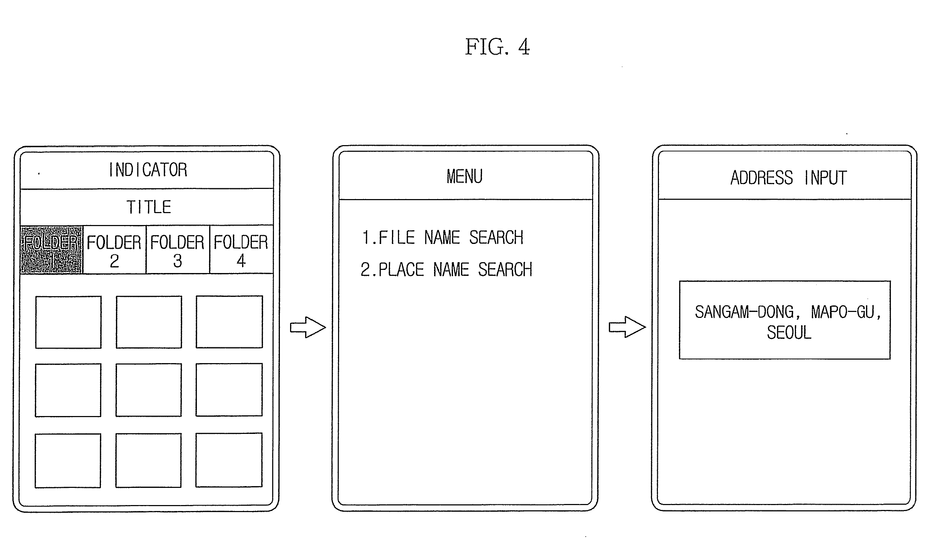

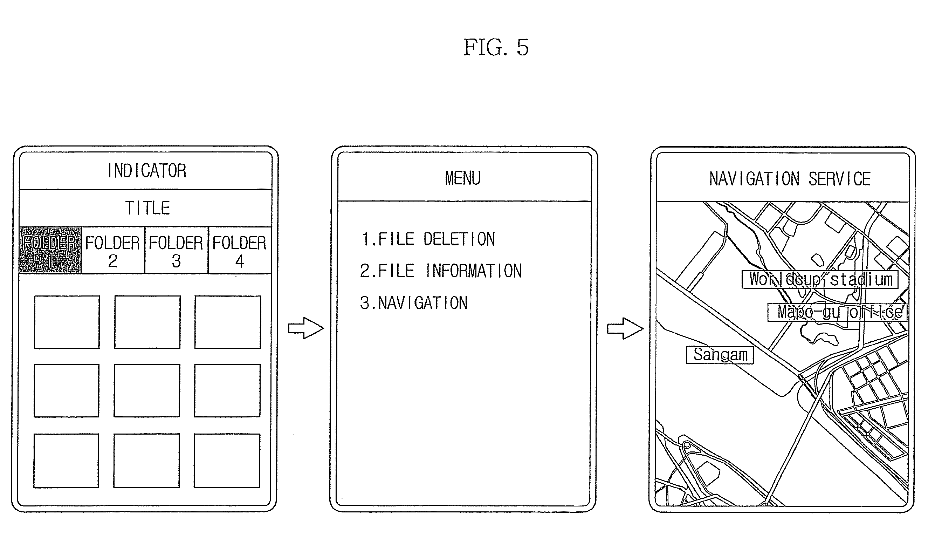

FIG. 4 and FIG. 5 are views illustrating an image including location information and a method for utilizing the same in a mobile terminal according to an exemplary embodiment. In the case of FIG. 4, a method for storing latitude/longitude and place name information in an EXIF header of a JPEG file and utilizing the data is shown.

FIG. 4 shows management and display of data in a multimedia management album. If a user desires to search a specific place name (for example, Sangam-Dong), the photographs or other multimedia files including the place name input by the user are retrieved and aligned using place name information stored in the EXIF header of the photographs or other multimedia files.

When the user inputs a specific place name so as to request a search, the mobile terminal retrieves one or more pieces of multimedia data, in which place name information that matches the user input is registered in a header portion, and aligns and shows the retrieved multimedia data.

FIG. 5 shows a service of analyzing latitude/longitude information stored in an EXIF header, transferring the data to a location guide service, such as a navigation service, a map service, or a traffic guide service installed in a mobile phone, and providing guidance to a location included in a multimedia data file. This service may be useful when the multimedia lata file, for example, a photo, including location information is transmitted between users through a Multimedia Messaging Service (MMS), infrared communication, or the like. The user may include the current location, tourist attractions, favorite restaurants, or the like by this method.

When a user selects multimedia data on a mobile terminal so as to request a map service, the mobile terminal may analyze location information stored in a header portion of the selected multimedia data and acquire place name information on a map indicated by the location information. Thereafter, the mobile terminal may transfer the place name information to a built-in location guide service such that a location indicated by the place name information may be displayed on a map.

Since latitude/longitude information and place name information are directly stored in an EXIF header, a location guide service is available without regard to the type of a mobile terminal management system. Data including location information may be transferred to others through the MMS or the like so as to utilize various services.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A mobile terminal to manage a location using multimedia data and a method thereof are disclosed. The mobile terminal acquires a Global Positioning System (GPS) satellite signal in a camera preview and utilizes the GPS satellite signal in a map service in association with multimedia data. In addition, the mobile terminal acquires and stores place name information from a location guide service using location information, and provides a service using the location information stored in the multimedia data.

## Claims

1. A mobile terminal, comprising:
a display;
a mode selector to select a location tracking mode in which a Global Positioning System (GPS) satellite signal is used to acquire location information to be associated with multimedia 5data displayed on the display;
a location tracker to track a location according to the selected location tracking mode, and to acquire the location information; and
a storage to store the location information.

2. The mobile terminal of claim 1, wherein the mode selector selects the location 10tracking mode according to whether the mobile terminal is located indoors or outdoors.

3. The mobile terminal of claim 1, wherein, if the mobile terminal is located indoors, the location tracker acquires the location information in a mobile station (MS)-assisted GPS mode in which the mobile terminal transmits a GPS satellite signal to a server of a mobile communication network and receives a location value from the server of the mobile communication network in response thereto.

4. The mobile terminal of claim 1, wherein, if the mobile terminal is located outdoors, the location tracker acquires the location information in a mobile station (MS)-based GPS mode in which the mobile terminal searches for a GPS satellite signal and calculates a location value according to the GPS satellite signal.

5. The mobile terminal of claim 4, wherein the location tracker searches for the GPS satellite signal in the MS-based GPS mode and, if the signal is not found within a time, the location tracker changes the location tracking mode to an MS-assisted GPS mode to acquire the location information via a server of a mobile communication network.

6. The mobile terminal of claim 1, further comprising a location guide service linker to associate the location information with a location guide service to acquire place name information on a map indicated by the location information, to transfer the place name information to the storage, and to store the place name information in a header of the multimedia data together with the location information.

7. The mobile terminal of claim 1, further comprising a multimedia manager to retrieve one or more pieces of multimedia data, in which place name information matched to an input is registered in a header portion, from the storage if a place name search is input, and to align and display the retrieved multimedia data on the display.

8. The mobile terminal of claim 1, further comprising a location guide service linker to analyze location information stored in a header portion of multimedia data to acquire place name information on a map indicated by the location information if multimedia data is selected, to transfer the place name information to a location guide service, and to display the place name information on the map.

9. A method for location management for a mobile terminal, comprising:
displaying a multimedia data on a screen;
selecting a location tracking mode in which a GPS satellite signal is used to acquire location information to be associated with the multimedia data;
acquiring the location information by tracking a location in the selected location tracking mode; and
storing the location information to be associated with the multimedia data.

10. The method of claim 9, wherein the location tracking mode is selected according to whether the mobile terminal is located indoors or outdoors.

11. The method of claim 9, further comprising, if the mobile terminal is located indoors, transmitting a GPS satellite signal to a server of a mobile communication network and receiving from the server of the mobile communication network a location value of the mobile terminal in response thereto in an MS-assisted GPS mode to acquire the location information.

12. The method of claim 9, further comprising, if the mobile terminal is located outdoors, searching for the GPS satellite signal and calculating a location value thereof according to the GPS satellite signal in an MS-based GPS mode to acquire the location information.

13. The method of claim 12, further comprising searching for the GPS satellite signal in the MS-based GPS mode and, if the GPS satellite signal is not found within a time, changing the location tracking mode to an MS-assisted GPS mode to acquire the location information via a server of a mobile communication network.

14. The method of claim 9, wherein the location information is associated with a location guide service to acquire place name information on a map indicated by the location information and the place name information is stored in a header portion of the multimedia data together with the location information.

15. The method of claim 9, further comprising:
retrieving multimedia data, in which place name information associated with an input is registered in a header of the multimedia data, if a place name search is input; and
aligning and displaying the retrieved multimedia data.

16. The method of claim 9, further comprising:
analyzing the location information stored in a header of multimedia data to acquire place name information on a map indicated by the location information, if the multimedia data is selected; and
transferring the place name information to a location guide service and displaying the place name information on a map.

17. A mobile terminal, comprising:
a mode selector to select a location tracking mode;
a location tracker to track a location according to the selected location tracking mode, and to acquire location information; and
a storage to store the location information.

18. The mobile terminal of claim 17, where in the location tracker comprises:
a mobile station (MS)-assisted Global Positioning System (GPS) processor to control transmission of a GPS satellite signal to a server of a mobile communication network.

19. The mobile terminal of claim 18, wherein the MS-assisted GPS processor controls the transmission of the GPS satellite signal if the selected location tracking mode is an MS-assisted GPS mode.

20. The mobile terminal of claim 17,
where in the location tracker comprises:
an MS-based GPS processor to control searching for a GPS satellite signal and calculation of a location value according to the GPS satellite signal.

21. The mobile terminal of claim 20, where the MS-based GPS processor controls the searching and the calculation if the selected location tracking mode is an MS-based GPS mode.

22. The mobile terminal of claim 20, where if the GPS satellite signal is not found within a time, the location tracker changes the location tracking mode from an MS-based GPS mode to an MS-assisted GPS mode to acquire the location information via a server of a mobile communication network.
